# FASCICULE DE BREVET EUROPEEN

(11) **EP 3 027 862 B1**
(45) Date de publication et mention de la délivrance du brevet: **31.10.2018**
(21) Numéro de dépôt: 14747062.9
(22) Date de dépôt: 27.06.2014
(51) Int. Cl.: F02B 37/16, F16K 47/04, F01N 1/24

(54) **ENSEMBLE DE REGULATION DE PRESSION DE GAZ ET MOTEUR COMPRENANT UN TEL ENSEMBLE**
GASDRUCKREGELUNGSANORDNUNG UND MOTOR MIT SOLCH EINER ANORDNUNG
GAS PRESSURE REGULATING ASSEMBLY AND ENGINE COMPRISING SUCH AN ASSEMBLY

(30) Priorité: 30.07.2013 FR 1357499
(43) Date de publication de la demande: 08.06.2016
(73) Titulaire: PSA Automobiles SA, 78300 Poissy (FR)
(72) Inventeur: TOUPET, Stephane, F-78790 Arnouville Les Mantes (FR); ARETHUSE, Pascal, F-91700 Ste Genevieve Des Bois (FR); RAVASSARD, Stephane, F-91400 Gometz La Ville (FR)
(86) Numéro de dépôt international: PCT/FR2014/051655
(87) Numéro de publication internationale: WO 2015/015073

(56) Documents cités:
- DE-A1- 2 835 508
- DE-A1-102005 053 356
- JP-A- S5 987 227
- US-A- 1 844 106

## Description

### Domaine technique de l'invention

La présente invention se rapporte au domaine de la régulation de la pression de gaz et plus particulièrement la régulation de la pression d'air de suralimentation des turbocompresseurs équipant les moteurs à combustion interne.

### Arrière-plan technologique

Les turbocompresseurs de moteur à combustion sont équipés d'un système de régulation de la pression d'air de suralimentation, désigné par vanne de décharge ou plus communément par « dump valve » en anglais dans le milieu motoriste, qui protège contre les surpressions dans le compresseur et le phénomène de pompage.

Lorsque le turbocompresseur tourne à vitesse élevée et fournit la suralimentation, il ne peut pas s'arrêter ou même ralentir très rapidement car le système d'admission est encore sous pression. La pression ne pouvant s'échapper, celle-ci est refoulée dans le compresseur et joue le rôle de contre-pression tentant de faire tourner la roue dans l'autre sens, ce qui est nuisible pour le compresseur et pose un problème de fiabilité à long terme.

Ce système est généralement intégré au compresseur et contient une soupape par exemple sous forme d'une membrane à ressort ou d'un piston qui se soulève lorsqu'il détecte une surpression déterminée. La vanne de décharge ou « dump valve » peut par exemple être indifféremment électrique ou pneumatique.

En fonctionnement, lorsque la vanne de décharge est fermée, l'air entre dans le compresseur du turbocompresseur, est comprimé puis conduit vers un échangeur de chaleur pour y être refroidit avant son admission dans les cylindres du moteur. Lorsque la vanne de décharge est ouverte, la surpression de l'air s'évacue par la soupape puis est réacheminée en entrée du compresseur. Cependant, lors de son fonctionnement, la vanne de décharge ou « dump valve » émet un sifflement bien marqué lorsqu'elle s'ouvre, d'intensité sonore importante et désagréable pour le client.

Cette architecture classique pose aussi d'autres problèmes :
- Un défaut de fiabilité : la vanne de décharge ou « dump valve » étant au contact direct du carter métallique du compresseur, la température générée par la compression de l'air, de l'ordre de 150°C en moyenne, est transmise directement à la vanne de décharge ou « dump valve » et à ses composants, endommageant plus rapidement cette dernière et plus particulièrement l'étanchéité, générant des fuites accompagnées d'une perte de puissance moteur. De plus, le freinage de la turbine de compresseur par la contre-pression générée par le refoulement de l'air compressé du circuit d'admission vers le compresseur peut amener à long terme une casse du turbocompresseur.
- une perturbation de l'écoulement de l'air dans le compresseur et dans le circuit de suralimentation : en effet l'alésage présent dans le carter du compresseur par lequel s'échappe l'air lorsque la soupape s'ouvre créé une perturbation dans l'écoulement de l'air, donc une perte de charge qui abaisse le rendement maximum du turbocompresseur.
- une difficulté de gestion de l'encombrement : dans certaines configurations moteurs la dump valve gène l'implantation du turbocompresseur dans l'espace alloué.
- une obligation d'utiliser d'un turbocompresseur spécifique : l'utilisation d'un turbocompresseur spécifique pour lequel le système de dump valve n'est pas prévu pose un problème majeur. Un carter spécifique intégrant un emplacement pour la vanne de décharge ou « dump valve »doit être fabriqué avec des coûts non négligeables.

Il est par ailleurs connu, par exemple du document FR2970523 ou du document JPS5987227A de déporter le système de de régulation de la pression d'air de suralimentation en aval du corps du compresseur, relativement au sens de l'écoulement d'air d'admission, cependant si ce principe permet de remédier aux inconvénients précités de l'architecture classique, il ne permet pas de traiter la nuisance sonore due à l'ouverture de la vanne de décharge ou « dump valve ».

L'invention tend à résoudre les problèmes de l'art antérieur en proposant, un ensemble de régulation de pression d'air de suralimentation d'un turbocompresseur pour un moteur à combustion interne comprenant :
- un circuit de passage d'air de suralimentation à réguler en pression,
- un circuit de décharge d'air de suralimentation débouchant dans le circuit de passage,
- une vanne de régulation de la pression d'air de suralimentation destinée à contrôler la décharge d'air de suralimentation du circuit de passage dans le circuit de décharge,
le circuit de décharge d'air de suralimentation comprenant un silencieux pour l'atténuation de bruit généré lors de la décharge d'air de suralimentation du circuit de passage dans le circuit de décharge. Le circuit de décharge comprend encore une cavité formant une capacité tampon pour l'air de suralimentation déchargé avant son passage dans le silencieux.

De préférence, le silencieux comprend un élément de filtration métallique.

De préférence encore, l'air de suralimentation déchargé est évacué à l'air libre après son passage dans le silencieux.

Dans une variante, l'ensemble de l'invention comprend :
- un corps dans lequel est aménagé le circuit de passage d'air de suralimentation à réguler en pression et une ouverture par laquelle le circuit de décharge débouche dans le circuit de passage,
- un couvercle supportant le silencieux et la vanne, qui assemblé au corps délimite le circuit de décharge.

De préférence, le corps est en polymère moulé par injection.

De préférence encore, le couvercle est en polymère moulé par injection.

De préférence, le polymère garantit une tenue en de pression de l'ordre de 3,5 bars absolu et une tenue en de température comprise entre 150 et 200°C.

De préférence, le polymère est un polyphtalamide chargé en fibre de verre.

Dans une autre variante, le circuit de passage présente une surface interne lisse.

L'invention concerne aussi un moteur à combustion interne comprenant une ligne d'admission comportant des moyens de suralimentation en air d'admission, caractérisé en ce que la ligne d'admission comprend un ensemble de régulation de pression d'air de suralimentation selon l'une quelconque des variantes décrites disposé en aval des moyens de suralimentation en air d'admission.

De préférence, dans le cas où la ligne d'admission comprend un refroidisseur d'air de suralimentation disposé en aval des moyens de suralimentation en air d'admission, l'ensemble de régulation de pression d'air de suralimentation est disposé en aval du refroidisseur.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un moteur à combustion interne comprenant des moyens de suralimentation en air d'admission et un ensemble de régulation de la pression d'air d'admission de l'invention.
- La figure 2 est une vue en perspective d'un mode de réalisation préféré d'un ensemble de régulation de la pression d'air d'admission de l'invention.
- La figure 3 est une vue en perspective du corps de l'ensemble avec son couvercle de l'ensemble illustré à la figure 2.
- La figure 4 est une vue en perspective du corps de l'ensemble illustré à la figure 2.
- La figure 5 est une vue en coupe transversale de l'ensemble illustré à la figure 2.

### Description détaillée

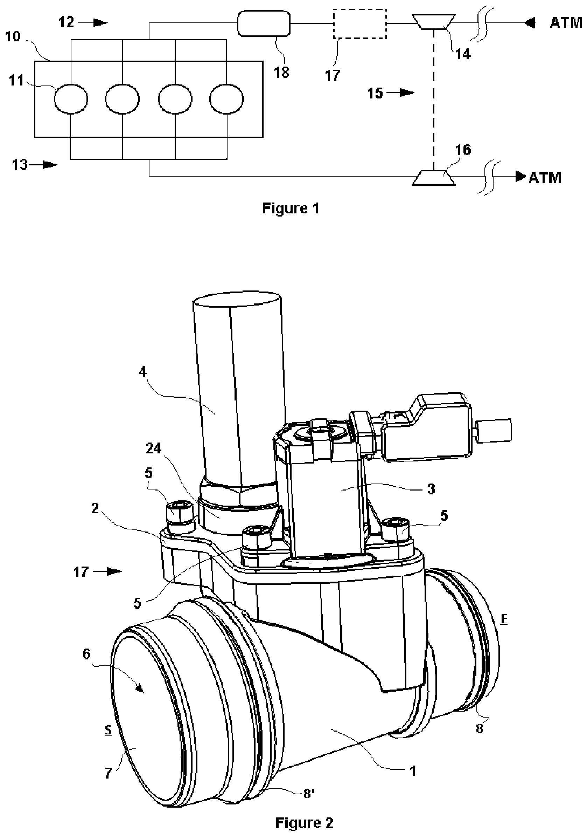

Sur la figure 1 est représenté un moteur à combustion interne, par exemple de type à allumage commandé ou de type à allumage par compression, comprenant un bloc moteur 10 doté d'au moins un cylindre 11. Sur la figure 1 sont représentés quatre cylindres 2, mais le moteur peut en comprendre un nombre différent.

Le moteur à combustion interne comprend une ligne 12 d'admission d'air et une ligne 13 d'échappement des gaz brulés produits par le moteur lors de son fonctionnement.

Pris dans le sens de l'écoulement de l'air de l'atmosphère, ATM, vers les cylindres 11, la ligne 12 d'admission d'air présente, des moyens de suralimentation en air, tel qu'un compresseur 14 de turbocompresseur 15 et, disposé en aval du compresseur un ensemble 17 de régulation de pression d'air de suralimentation selon l'invention. La ligne 12 d'admission d'air peut encore comprendre un refroidisseur 18 d'air de suralimentation disposé en aval de l'ensemble 17 de régulation de pression d'air de suralimentation.

Non réprésenté, la ligne 12 d'admission d'air peut encore comprendre un filtre à air, des moyens de dosage du débit d'air admis dans les cylindres 11.

Pris dans le sens de l'écoulement des gaz brûlés en provenance des cylindres 11 vers l'atmosphère, ATM, la ligne 13 d'échappement des gaz brulés comprend une turbine 16 de turbocompresseur 15, pour l'entrainement du compresseur 14.

Non réprésenté, la ligne 13 d'échappement peut comprendre encore au moins un organe de dépollution comme un catalyseur ou filtre à particules.

Le fait que l'ensemble 17 de régulation de pression d'air de suralimentation est déporté du compresseur permet :
- une plus grande fiabilité de fonctionnement de l'ensemble 17 et de ses composants décrits plus loin car on évite ainsi le contact le compresseur 14, source de chaleur importante et donc sa dégradation prématurée.
- un meilleur rendement du compresseur 14.
- Cela permet aussi l'utilisation de nombreux modèles de turbocompresseur non équipés de vanne de décharge ou « dump valve ».

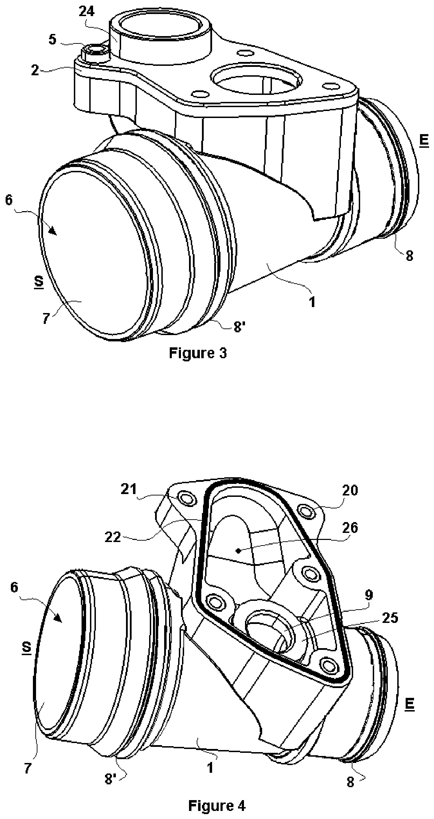

En référence aux figures 2 à 5, est présenté un mode préféré de réalisation de l'ensemble 17 de régulation de pression de gaz.

L'ensemble 17 de régulation de pression de gaz forme un ensemble compact. L'ensemble 17 de régulation de pression de gaz comprend un corps 1 dans lequel est aménagé un circuit 6 de passage du gaz à réguler en pression entre une entrée E de gaz et une sortie S de gaz.

Afin de conduire l'air compressé en générant le moins de perte de charge possible, il est prévu que le circuit 6 de passage présente une surface interne 7 lisse. Du côté de l'entrée E ainsi que du côté de la sortie S sont prévues des interfaces 8, 8' adaptées à recevoir un raccord spécifique. Par exemple, du côté entrée E, l'interface 8 peut comprendre une lèvre et une partie cannelée adaptées à recevoir une conduite souple fixée par collier. Par exemple encore, du côté sortie S, l'interface 8' peut être prévue pour recevoir un raccord rapide. Toujours afin de générer le moins de perte de charge possible, le circuit 6 de passage est de préférence rectiligne, tubulaire, de section constante ou divergente relativement au sens de circulation du gaz.

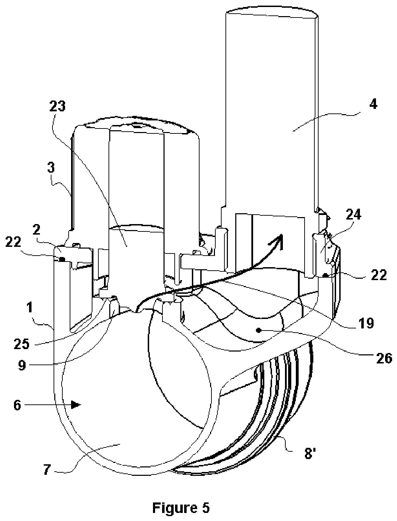

Le corps 1 comprend encore une ouverture 9 pour permettre la communication du circuit 6 de passage vers un circuit de décharge de gaz, dont le cheminement est matérialisé par la flèche 19, figure 5.

Le corps 1 est de préférence obtenu par moulage par injection d'un polymère, ce qui permet une plus grande liberté de conception et d'adaptation aux différents environnements moteur.

Afin de tenir aux contraintes de pression (de l'ordre de 3,5 bars absolu) et de température (entre 150 et 200 C), le polymère choisi est de préférence un polyphtalamide (encore désigné par l'abréviation PPA), renforcé par une charge en fibre de verre. La charge en fibre de verre est de préférence comprise entre 15% et 60% en masse, ce qui permet une augmentation du module d'Young et de la limite élastique en température) et de préférence encore de 45%. D'autres polymères dits techniques, c'est-à-dire avec des hautes performances physico-chimiques et mécaniques peuvent être utilisés à la seule condition qu'ils répondent de manière identique voire supérieur au cahier des charges (pression et température) de la fonction.

L'ensemble 17 de régulation de pression de gaz comprend encore un couvercle 2 disposé sur le corps 1 et assemblé sur celui-ci par des vis 5. Le couvercle 2 supporte une vanne 3 de régulation de la pression d'air de suralimentation. La vanne 3 est destinée à contrôler la décharge de gaz du circuit 6 de passage dans le circuit 19 de décharge. La vanne 3 peut être du type pneumatique ou électrique. La vanne 3 comprend un élément 23 d'obturation de l'ouverture 9, tel qu'un piston ou une soupape. L'obturation est réalisée par contact de l'élément 23 sur un siège 25 aménagé autour de l'ouverture 9.

Le couvercle 2 est de préférence obtenu par moulage par injection d'un polymère, ce qui permet une liberté de conception et d'évolution aux différents types de moteur turbocompressés, ainsi que d'adaptation aux contraintes d'encombrement. L'usage d'un polymère a aussi pour avantage de d'isoler thermiquement la vanne 3 de régulation de pression, ce qui permet d'améliorer la fiabilité du système. Pour des raisons de tenue en pression, température et de simplicité de processus, le polymère choisi est de préférence le même que celui du corps 1.

Afin d'assurer le maintien de la fixation du couvercle 2 au corps 2 en plastique par les vis 5, celle-ci coopèrent avec des inserts 20 métalliques disposés dans des fûts 20 de vissage aménagés dans le corps 1. Afin d'assurer l'étanchéité entre le corps 1 et le couvercle 2, il est de plus prévu un joint 22 d'étanchéité au contact entre le corps 1 et le couvercle 2. Le joint 22 d'étanchéité est disposé dans une gorge prévue à cet effet.

Conformément à l'invention, le couvercle 2 supporte encore un silencieux 4 pour l'atténuation du bruit généré lors d'une décharge de gaz du circuit 6 de passage d'air compressé vers le circuit 19 de décharge. Le silencieux 4 comprend de préférence un élément de filtration métallique, par exemple un treillis métallique, au travers duquel l'air déchargé passe. Cet élément existe en standard industriel avec différents débits (de 520 à 8500 litres/minute), qui a l'avantage d'être compact, de tenir les contraintes de températures et de pressions propres à l'environnement d'un moteur à combustion interne, et d'être peu couteux. La porosité du filtre métallique permet d'atténuer le bruit de la décharge de gaz juste assez pour procurer de plus « une signature sonore » attendue par le client. « Cette signature sonore » est d'autant mieux perçue que le gaz déchargé est évacué à l'air libre après son passage dans le silencieux 4. Le silencieux 4 est relié par vissage au couvercle 2 par un embout 24 adapté. Ainsi le circuit 19 de décharge est délimité par l'assemblage du couvercle 2 au corps 1. Le circuit 19 de décharge débouche par l'ouverture 9 dans le circuit 6 de passage et se termine par le silencieux 4. Autrement dit l'air déchargé passe à travers le filtre métallique pour déboucher directement à l'air libre.

Afin de laisser à l'air déchargé le temps de passer au travers du filtre 4, il est prévu d'aménager dans le circuit 19 de décharge entre la vanne 3 et le filtre 4 une cavité 26. Cette cavité forme une forme une capacité tampon pour le gaz déchargé avant son passage dans le silencieux 4.

L'assemblage de l'ensemble 17 de régulation décrit aux figures 2 à 5 comprend donc les étapes de :
- Moulage par injection du corps 1 et du couvercle 2,
- Mise en place des inserts 20 métalliques dans les fûts 21 de vissage,
- Mise en place du joint 22 dans la gorge,
- Mise en place du couvercle 2 sur le corps 1,
- Mise en place de la vanne 3 de régulation de pression,
- Vissage,
- Mise en place du filtre 4 métallique.

L'ensemble 17 peut être disposé après le refroidisseur, c'est-à-dire en aval de celui-ci. Cette configuration est plus efficace car dans ce cas la température d'air plus faible facilite la décompression.

L'ensemble 17 est particulièrement adapté à la régulation de la pression d'air de suralimentation d'un moteur à combustion interne mais peut convenir à d'autres applications de régulation de pression de gaz.

## Revendications

1. Ensemble (17) de régulation de pression d'air de suralimentation d'un turbocompresseur pour un moteur à combustion interne comprenant :
- un circuit (6) de passage d'air de suralimentation à réguler en pression,
- un circuit (19) de décharge d'air de suralimentation débouchant dans le circuit (6) de passage,
- une vanne (3) de régulation de la pression d'air de suralimentation destinée à contrôler la décharge d'air de suralimentation du circuit (6) de passage dans le circuit (19) de décharge,
le circuit (19) de décharge d'air de suralimentation comprenant un silencieux (4) pour l'atténuation de bruit généré lors de la décharge d'air de suralimentation du circuit (6) de passage dans le circuit (19) de décharge **caractérisé en ce que** le circuit (19) de décharge comprend une cavité (25) formant une capacité tampon pour l'air de suralimentation déchargé avant son passage dans le silencieux (4).

2. Ensemble selon la revendication 1, **caractérisé en ce qu'**il forme un ensemble compact.

3. Ensemble selon la revendication 1 ou la revendication 2, **caractérisé en ce que** le silencieux (4) comprend un élément de filtration métallique au travers duquel l'air déchargé passe.

4. Ensemble selon l'une quelconque des revendications précédentes, **caractérisé en ce que** le gaz déchargé est évacué à l'air libre après son passage dans le silencieux (4).

5. Ensemble selon l'une quelconque des revendications précédentes, **caractérisé en ce qu'**il comprend :
- un corps (1) dans lequel est aménagé le circuit (6) de passage d'air de suralimentation à réguler en pression et une ouverture (9) par laquelle le circuit (19) de décharge débouche dans le circuit (6) de passage,
- un couvercle (2) supportant le silencieux (4) et la vanne (3), qui assemblé au corps (1) délimite le circuit (19) de décharge.

6. Ensemble selon la revendication 5, **caractérisé en ce que** le corps (1) est en polymère moulé par injection.

7. Ensemble selon la revendication 5 ou la revendication 6, **caractérisé en ce que** le couvercle (2) est en polymère moulé par injection.

8. Ensemble selon la revendication 6 ou la revendication 7, **caractérisé en ce que** le polymère garantit une tenue en de pression de l'ordre de 3,5 bars absolu et une tenue en de température comprise entre 150 et 200°C.

9. Ensemble selon la revendication 8, **caractérisé en ce que** le polymère est un polyphtalamide chargé en fibre de verre.

10. Ensemble selon l'une quelconque des revendications précédentes, **caractérisé en ce que** le circuit (6) de passage présente une surface interne lisse.

11. Moteur à combustion interne comprenant une ligne (12) d'admission comportant des moyens de suralimentation en air d'admission, **caractérisé en ce que** la ligne (12) d'admission comprend un ensemble (17) de régulation de pression d'air de suralimentation selon l'une quelconque des revendications précédentes disposé en aval des moyens de suralimentation en air d'admission.

12. Moteur à combustion interne selon la revendication 11, **caractérisé en ce que** la ligne (12) d'admission comprend un refroidisseur (18) d'air de suralimentation disposé en aval des moyens de suralimentation en air d'admission, et **en ce que** l'ensemble (17) de régulation de pression d'air de suralimentation est disposé en aval du refroidisseur (18).

## Patentansprüche

1. Anordnung (17) zur Druckregelung für Aufladeluft eines Turboverdichters für einen Verbrennungsmotor, die Folgendes umfasst:
- einen Durchgangskreislauf (6) für Aufladeluft, die hinsichtlich des Drucks zu regeln ist,
- einen Auslasskreislauf (19) für Aufladeluft, der in den Durchgangskreislauf (6) mündet,
- einen Regelschieber (3) des Aufladeluftdrucks, der dazu bestimmt ist, das Auslassen von Aufladeluft des Durchgangskreislaufs (6) in den Auslasskreislauf (19) zu steuern,
wobei der Auslasskreislauf (19) für Aufladeluft einen Schalldämpfer (4) zum Dämpfen von Geräusch, das bei dem Auslassen von Aufladeluft aus dem Durchgangskreislauf (6) in den Auslasskreislauf (19) erzeugt wird, umfasst, **dadurch gekennzeichnet, dass** der Auslasskreislauf (19) einen Hohlraum (25) umfasst, der eine Pufferkapazität für ausgelassene Aufladeluft vor ihrem Durchgang in dem Schalldämpfer (4) bildet.

2. Anordnung nach Anspruch 1, **dadurch gekennzeichnet, dass** sie eine kompakte Baugruppe bildet.

3. Anordnung nach Anspruch 1 oder Anspruch 2, **dadurch gekennzeichnet, dass** der Schalldämpfer (4) ein metallisches Filterelement umfasst, durch das die ausgelassene Luft durchgeht.

4. Anordnung nach einem der vorhergehenden Ansprüche, **dadurch gekennzeichnet, dass** das ausgelassene Gas nach seinem Durchgehen in dem Schalldämpfer (4) in die Umgebung abgeleitet wird.

5. Anordnung nach einem der vorhergehenden Ansprüche, **dadurch gekennzeichnet, dass** sie Folgendes umfasst:
- einen Körper (1), in dem ein Durchgangskreislauf (6) für Aufladeluft, deren Druck zu regeln ist, und eine Öffnung (9), durch die der Auslasskreislauf (19) in den Durchgangskreislauf (6) mündet, eingerichtet ist,
- einen Deckel (2) der den Schalldämpfer (4) und den Schieber (3) trägt, der, mit dem Körper (1) zusammengefügt, den Auslasskreislauf (19) abgrenzt.

6. Anordnung nach Anspruch 5, **dadurch gekennzeichnet, dass** der Körper (1) aus Polymer besteht, der durch Spritzguss geformt ist.

7. Anordnung nach Anspruch 5 oder Anspruch 6, **dadurch gekennzeichnet, dass** der Deckel (2) aus Polymer besteht, der durch Spritzguss geformt ist.

8. Anordnung nach Anspruch 6 oder Anspruch 7, **dadurch gekennzeichnet, dass** der Polymer eine Druckfestigkeit in der Größenordnung von 3,5 bar absolut und eine Temperaturbeständigkeit zwischen 150 und 200 °C garantiert.

9. Anordnung nach Anspruch 8, **dadurch gekennzeichnet, dass** der Polymer ein Polyphtalamid mit Glasfaserverstärkung ist.

10. Anordnung nach einem der vorhergehenden Ansprüche, **dadurch gekennzeichnet, dass** der Durchgangskreislauf (6) eine glatte innere Oberfläche aufweist.

11. Verbrennungsmotor, der eine Ansaugleitung (12) umfasst, die Mittel zum Aufladen mit Ansaugluft umfasst, **dadurch gekennzeichnet, dass** die Ansaugleitung (12) eine Anordnung (17) zur Druckregelung für Aufladeluft nach einem der vorhergehenden Ansprüche, die stromabwärts der Auflademittel für Ansaugluft angeordnet ist, umfasst.

12. Verbrennungsmotor nach Anspruch 11, **dadurch gekennzeichnet, dass** die Ansaugleitung (12) einen Kühler (18) für Aufladeluft umfasst, der stromabwärts der Auflademittel für Ansaugluft angeordnet ist, und dass die Anordnung (17) zur Druckregelung für Aufladeluft stromabwärts des Kühlers (18) angeordnet ist.

## Claims

1. A pressure regulating assembly (17) of charge air of a turbocharger for an internal combustion engine including:
- a circuit (6) for passage of charge air requiring pressure regulation,
- a discharge circuit (19) of charge air emerging in the passage circuit (6),
- a valve (3) for regulating the pressure of charge air intended to control the discharge of charge air from the passage circuit (6) in the discharge circuit (19),
the discharge circuit (19) of charge air including a silencer (4) to attenuate the noise generated during the discharge of charge air from the passage circuit (6) in the discharge circuit (19), **characterized in that** the discharge circuit (19) includes a cavity (25) forming a buffering capacity for the charge air discharged before its passage in the silencer (4).

2. The assembly according to Claim 1, **characterized in that** it forms a compact assembly.

3. The assembly according to Claim 1 or Claim 2, **characterized in that** the silencer (4) includes a metallic filtration element, through which the discharged air passes.

4. The assembly according to any one of the preceding claims, **characterized in that** that the discharged gas is evacuated to the open air after its passage in the silencer (4).

5. The assembly according to any one of the preceding claims, **characterized in that** it includes:
- a body (1) in which there is arranged the passage circuit (6) of charge air requiring pressure regulation, and an opening (9) by which the discharge circuit (19) emerges in the passage circuit (6),
- a cover (2) supporting the silencer (4) and the valve (3) which, assembled to the body (1), delimits the discharge circuit (19).

6. The assembly according to Claim 5, **characterized in that** the body (1) is made of injection-moulded polymer.

7. The assembly according to Claim 5 or Claim 6, **characterized in that** the cover (2) is made of injection-moulded polymer.

8. The assembly according to Claim 6 or Claim 7, **characterized in that** the polymer guarantees a pressure capacity in the order to 3.5 bars absolute and a temperature stability comprised between 150 and 200°C.

9. The assembly according to Claim 8, **characterized in that** the polymer is a polyphthalamide reinforced with fibreglass.

10. The assembly according to any one of the preceding claims, **characterized in that** the passage circuit (6) has a smooth internal surface.

11. An internal combustion engine including an intake line (12) comprising means for the supercharging with intake air, **characterized in that** the intake line (12) includes a pressure regulating assembly (17) of charge air according to any one of the preceding claims, arranged downstream of the means for supercharging with intake air.

12. The internal combustion engine according to Claim 11, **characterized in that** the intake line (12) includes a charge air cooler (18) arranged downstream of the means for supercharging with intake air, and **in that** the pressure regulating assembly of charge air is arranged downstream of the cooler (18).
